# FASCICULE DE BREVET EUROPEEN

(11) **EP 1 136 139 B1**
(45) Date de publication et mention de la délivrance du brevet: **16.06.2010**
(21) Numéro de dépôt: 01400592.0
(22) Date de dépôt: 07.03.2001
(51) Int. Cl.: B05D 1/26, B29C 63/00, F16L 47/02, F16L 41/08

(54) **Procédé destiné à étancher une section mise à nu de la paroi d'un corps creux en matériau composité à base de matiére thermoplastique renforcée**
Verfahren zum Abdichten einer freigelegten Sektion einer Wand eines Hohlkörpers aus verstärktem thermoplastischen Verbundwerkstoff
Process for sealing off a bare section of the wall of a tubular article composed of reinforced thermoplastics material

(30) Priorité: 21.03.2000 FR 0003577
(43) Date de publication de la demande: 26.09.2001
(73) Titulaire: Saint-Gobain Technical Fabrics Europe, 73000 Chambéry (FR)
(72) Inventeur: Debalme, Jean-Paul M., 7300 Chambery (FR); Rocher, Gilles M., 73000 Chambery (FR); Voiron, Jacques M., 73160 St Jean de Couz (FR)
(74) Mandataire: Muller, René

(56) Documents cités:
- EP-A- 0 369 181
- DD-A- 221 965
- DD-A- 221 966
- DE-A- 3 426 246
- DE-B- 1 108 419
- DE-U- 29 817 408
- GB-A- 1 202 161
- GB-A- 1 227 975
- GB-A- 2 099 688
- US-A- 2 565 753
- US-A- 3 081 213
- US-A- 3 207 831
- US-A- 4 865 792
- PATENT ABSTRACTS OF JAPAN vol. 0091, no. 41 (P-364), 15 juin 1985 (1985-06-15) -& JP 60 020336 A (MATSUSHITA DENKI SANGYO KK), 1 février 1985 (1985-02-01)
- PATENT ABSTRACTS OF JAPAN vol. 0030, no. 23 (C-038), 26 février 1979 (1979-02-26) -& JP 53 147640 A (SEKISUI CHEM CO LTD), 22 décembre 1978 (1978-12-22)
- PATENT ABSTRACTS OF JAPAN vol. 1996, no. 12, 26 décembre 1996 (1996-12-26) -& JP 08 216254 A (MITSUBISHI PLASTICS IND LTD), 27 août 1996 (1996-08-27)
- PATENT ABSTRACTS OF JAPAN vol. 1998, no. 06, 30 avril 1998 (1998-04-30) & JP 10 052863 A (MITSUBISHI PLASTICS IND LTD), 24 février 1998 (1998-02-24)
- PATENT ABSTRACTS OF JAPAN vol. 0050, no. 29 (M-056), 21 février 1981 (1981-02-21) -& JP 55 156023 A (AJIKAWA TEKKO KENSETSU KK), 4 décembre 1980 (1980-12-04)
- PATENT ABSTRACTS OF JAPAN vol. 0100, no. 88 (M-467), 5 avril 1986 (1986-04-05) -& JP 60 228134 A (AKIRA KISHIMOTO), 13 novembre 1985 (1985-11-13)
- PATENT ABSTRACTS OF JAPAN vol. 1998, no. 10, 31 août 1998 (1998-08-31) -& JP 10 113987 A (KAWASAKI HEAVY IND LTD; TAJIMA BUSSAN:KK), 6 mai 1998 (1998-05-06)

## Description

L'invention concerne l'étanchéité d'une section mise à nu de la paroi d'un corps creux en matière composite à base de matière thermoplastique et de fibres de renforcement, par exemple des fibres de verre.

L'invention sera plus particulièrement décrite pour des corps creux du type tuyaux destinés à véhiculer des fluides sous pression. Néanmoins, elle n'est pas limitée à cette application et peut par exemple concerner des réservoirs sous pression contenant des fluides sous pression.

Il est connu d'utiliser pour véhiculer des fluides sous pression des tuyaux en matière thermoplastique renforcée qui présentent l'avantage, tout en étant aussi résistants, d'être moins lourds que des canalisations en fonte ou en ciment, ou bien même des canalisations constituées uniquement par de la matière thermoplastique.

Ce type de tuyaux, tel que celui décrit dans la demande de brevet français FR 98/13293 est constitué d'une matrice en matière thermoplastique, par exemple en polyéthylène, d'une couche d'enrobage de la matrice à base de fibres de renforcement avantageusement mélangées à de la matière thermoplastique identique à celle de la matrice, ainsi que d'un revêtement en matière thermoplastique recouvrant la couche d'enrobage et de préférence identique à la matière de la matrice.

Le raccordement de deux tuyaux du type précité est obtenu à l'aide de dispositifs de jonction qui présentent nécessairement un système d'étanchéité pour étancher les tranches de tuyaux à abouter.

On connaît d'après les demandes de brevet français FR 2728051 et FR 00/00073 des dispositifs de jonction pour lesquels est prévu un joint destiné à être appliqué de manière solidaire contre les tranches en regard des deux tuyaux.

Néanmoins, dans ce cas l'étanchéité de la tranche d'un tuyau n'est obtenue que lors d'un raccordement. Or avant un tel raccordement, les tuyaux peuvent après fabrication rester stockés sans qu'aucune protection d'étanchéité ne leur soit appliquée et être ainsi susceptibles d'être agressés par des agents extérieurs.

Dans l'hypothèse où les tranches à nu d'un tuyau ne sont pas protégées et qu'elles subissent des contraintes élevées en pression par de l'eau ou par un fluide, l'eau ou le fluide sous pression peut, au cours du temps, s'infiltrer dans la couche d'enrobage le long des fibres de renforcement, ce qui peut provoquer une rupture interne de la matière thermoplastique se traduisant éventuellement par des cloques visibles sur la surface externe du tuyau; la résistance mécanique du tuyau n'est alors plus garantie.

Nous décrivons ci dessus le problème d'étanchéité des tranches à nu d'un tuyau mais le même problème se pose lorsqu'une découpe est faite à travers la paroi du tuyau en raison par exemple d'un piquage à établir avec un autre tuyau.

Par ailleurs, par précaution, il peut être souhaitable même si un raccordement étanche doit être effectué au niveau de la tranche d'un tuyau ou de toute découpe, d'étancher la matière interne composant le tuyau, en particulier les fibres de renforcement qui ne doivent en aucun cas être mises en contact avec le fluide véhiculé pour éviter tout risque de pollution et répondre aux critères alimentaires.

L'invention a donc pour but de rendre étanche les ouvertures libres d'un corps creux à base de matière thermoplastique et de fibres de renforcement, ou toute découpe de la paroi mettant à nu la composition interne constitutive du corps creux.

Le procédé destiné à étancher une section mise à nu dans la paroi d'un corps creux à base de matière thermoplastique et de fibres de renforcement, le corps creux étant notamment destiné à véhiculer ou contenir un fluide sous pression, la surface et les contours de la section étant revêtus d'une matière thermoplastique de protection qui est chauffée lors de son dépôt et est compatible avec ladite matière thermoplastique du corps creux pour réaliser une totale adhésion, est caractérisé en ce que la matière thermoplastique de protection est déposée sous la forme d'un cordon sensiblement plat de matière sensiblement fondue à l'aide d'un pistolet chauffant.

Selon une caractéristique, la section est préalablement chauffée avant le dépôt de la matière plastique de protection.

Selon une autre caractéristique, une pression est exercée sur la surface et les contours de la section pendant ou après le dépôt de la matière thermoplastique de protection. La matière thermoplastique de protection sera ébavurée après son refroidissement pour rendre nette la section étanchée.

Le procédé de l'invention peut tout à fait s'appliquer à un corps creux qui est avantageusement constitué d'une matrice en matière thermoplastique, d'une couche d'enrobage en matière thermoplastique dans laquelle sont mélangées des fibres de verre, et d'un revêtement en matière thermoplastique, la matière thermoplastique de la matrice étant de préférence identique à celles de la couche d'enrobage et du revêtement, ainsi qu'à la matière thermoplastique de protection.

D'autres caractéristiques et avantages de l'invention vont à présent être décrits en regard des dessins annexés sur lesquels,
- la figure 1 est une vue en coupe d'une section découpée d'un tuyau selon sa tranche ;
- la figure 2 est une vue en coupe et de profil d'une section découpée dans la paroi d'un tuyau;
- la figure 3 illustre une vue de dessus et de profil de la figure 1 sur laquelle est visible le dépôt de la matière thermoplastique de protection selon un mode de réalisation du procédé de l'invention;

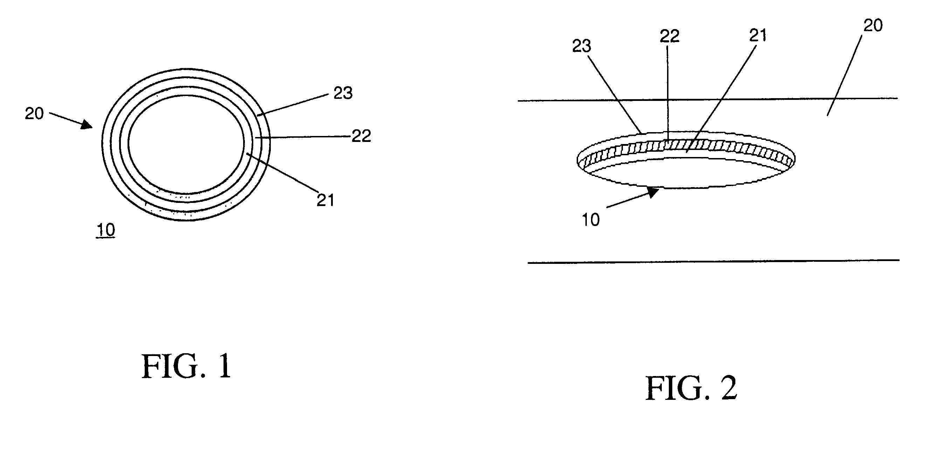

La figure 1 montre une vue en coupe d'une section 10 selon la tranche d'un tuyau à base de matière thermoplastique renforcée par des fibres, en particulier de verre.

La paroi 20 du tuyau comprend une matrice 21 en matière thermoplastique du type polyéthylène ou polypropylène, une couche d'enrobage 22 en matière thermoplastique renforcée par des fibres de verre, telle que du TWINTEX® commercialisé par la société VETROTEX, ainsi qu'un revêtement 23 de la couche d'enrobage constitué de matière thermoplastique, de préférence identique à celle de la matrice 21.

La section 10 selon la tranche du tuyau, mais qui pourrait aussi bien être pratiquée dans l'épaisseur de la paroi du tuyau comme visible à la figure 2, met à nu la matrice 21, la couche d'enrobage 22 et le revêtement 23.

Il est alors indispensable d'étancher la découpe pour éviter tout risque d'infiltration de fluide sous pression dans la couche d'enrobage 22 le long des fibres de renforcement, qui pourrait endommager le tuyau par des amorces de rupture interne, et ne garantirait plus la résistance mécanique du tuyau.

Par ailleurs, la couche d'enrobage 22 contenant les fibres de verre ne doit pas être en contact avec le fluide destiné à être véhiculé dans le tuyau pour éviter tout risque de pollution, et répondre ainsi aux critères alimentaires auxquels doit répondre le tuyau.

A cette fin, le procédé de l'invention a pour but de recouvrir d'une matière thermoplastique de protection 30 la surface et les contours de la section 10.

La matière thermoplastique de protection 30 est rendue solidaire de la matière thermoplastique du tuyau pour réaliser une continuité de la matière. La solidarisation s'effectuant par soudage à chaud des deux matières thermoplastiques, ces dernières sont nécessairement compatibles de sorte qu'après ramollissement elles peuvent sensiblement se mélanger, et assurer leur adhésion mutuelle après refroidissement. De préférence, on choisira pour la matière thermoplastique de protection 30 la même matière que celle du tuyau.

La première étape du procédé consiste à préchauffer la surface et les contours de la section 10 en vue de ramollir la matière thermoplastique du tuyau. Il est alors possible d'appliquer la matière thermoplastique de protection 30, elle aussi chauffée, pour la déposer à l'état ramolli.

Après dépôt de la matière thermoplastique 30, ou simultanément au dépôt selon le mode de réalisation choisi quant à la présentation de la matière thermoplastique comme nous le verrons ci-après, une pression est appliquée sur la surface et les contours de la section revêtue de la matière de protection de façon à assurer sa parfaite adhésion.

Le soudage obtenu, on opère à un ébavurage afin d'ôter le surplus de matière thermoplastique et rendre nette la section étanchée.

Plusieurs modes de réalisation peuvent être envisagés pour la présentation au dépôt de la matière thermoplastique de protection 30. Le choix du mode de réalisation dépendra essentiellement du type de section découpée, plus ou moins grande et réalisée selon la tranche du tuyau ou bien au travers de la paroi.

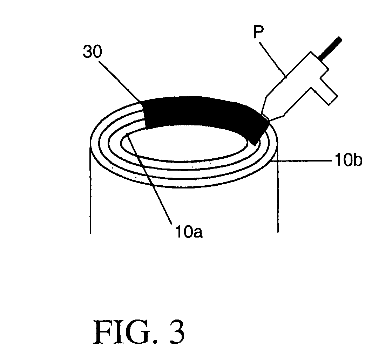

Dans un premier mode de réalisation (figure 3), en particulier pour étancher une section selon la tranche du tuyau, la matière thermoplastique se présente sous la forme d'un cordon de matière sensiblement fondue. Ce cordon est délivré par un outil chauffant simple de mise en oeuvre et adapté à faciliter sa mise en place sur la surface de la section, et les contours de la section, c'est-à-dire en débordant sur les parois interne et externe du tuyau pour recouvrir parfaitement les bords interne 10a et externe 10b de la section. L'outil tel qu'illustré à la figure 3 est un pistolet P chauffant dans lequel est introduit un bâtonnet rigide de matière thermoplastique et dont l'extrémité de sortie de la matière est de forme plate de façon à écraser contre la section, simultanément à son dépôt, le cordon alors sensiblement plat de matière thermoplastique.

## Revendications

1. Procédé destiné à étancher une section (10) mise à nu dans la paroi d'un corps creux à base de matière thermoplastique et de fibres de renforcement, le corps creux étant notamment destiné à véhiculer ou contenir un fluide sous pression, la surface et les contours de la section (10) étant revêtus d'une matière thermoplastique de protection (30) qui est chauffée lors de son dépôt et est compatible avec ladite matière thermoplastique du corps creux pour réaliser une totale adhésion, **caractérisé en ce que** la matière thermoplastique de protection (30) est déposée sous la forme d'un cordon sensiblement plat de matière sensiblement fondue à l'aide d'un pistolet chauffant.

2. Procédé selon la revendication 1, **caractérisé en ce que** la section (10) est préalablement chauffée avant le dépôt de la matière plastique de protection (30).

3. Procédé selon l'une quelconque des revendications précédentes, **caractérisé en ce qu'**une pression est exercée sur la surface et les contours de la section pendant ou après le dépôt de la matière thermoplastique de protection (30).

4. Procédé selon l'une quelconque des revendications précédentes, **caractérisé en ce que** la matière thermoplastique de protection (30) est ébavurée après son refroidissement.

5. Procédé selon l'une quelconque des revendications précédentes, **caractérisé en ce que** le corps creux est constitué d'une matrice en matière thermoplastique (21), d'une couche d'enrobage (22) en matière thermoplastique dans laquelle sont mélangées des fibres de verre, et d'un revêtement (23) en matière thermoplastique.

6. Procédé selon la revendication 5, **caractérisé en ce que** la matière thermoplastique de la matrice (21) est identique à celles de la couche d'enrobage (22) et du revêtement (23), ainsi qu'à la matière thermoplastique de protection (30).

7. Application du procédé selon l'une quelconque des revendications précédentes à un tuyau à base de matière thermoplastique et de fibres de renforcement.

## Claims

1. Method for sealing a bared section (10) in the wall of a hollow body based on a thermoplastic and on reinforcing fibres, the hollow body being especially intended for conveying or containing a pressurized fluid, the surface and the contours of the section (10) being coated with a protective thermoplastic (30) which is heated while it is being deposited and is compatible with the said thermoplastic of the hollow body in order to achieve complete adhesion, **characterized in that** the protective thermoplastic (30) is deposited in the form of an approximately flat bead of material which is largely melted using a heat gun.

2. Method according to Claims 1, **characterized in that** the section (10) is preheated before the protective plastic (30) is deposited.

3. Method according to any one of the preceding claims, **characterized in that** pressure is exerted on the surface and the contours of the section during or after deposition of the protective thermoplastic (30).

4. Method according to any one of the preceding claims, **characterized in that** the protective thermoplastic (30) is deflashed after it has cooled.

5. Method according to any one of the preceding claims, **characterized in that** the hollow body consists of a matrix (21) made of a thermoplastic, an encapsulating layer (22) made of a thermoplastic in which glass fibres are mixed, and a coating (23) made of a thermoplastic.

6. Method according to Claim 5, **characterized in that** the thermoplastic of the matrix (21) is identical to those of the encapsulating layer (22) and the coating (23), and to the protective thermoplastic (30).

7. Application of the method according to any one of the preceding claims to a pipe based on a thermoplastic and reinforcing fibres.

## Patentansprüche

1. Verfahren zum Abdichten einer freigelegten Schnittfläche (10) in der Wand eines Hohlkörpers auf Thermoplast- und Verstärkungsfaserbasis, wobei der Hohlkörper insbesondere dazu bestimmt ist, ein Druckfluid zu transportieren oder zu enthalten, wobei die Oberfläche und die Konturen der Schnittfläche (10) mit einem Schutzthermoplast (30) überzogen sind, der während seines Abscheidens erhitzt wird und der mit dem Thermoplast des Hohlkörpers kompatibel ist, um eine vollständige Haftung herzustellen, **dadurch gekennzeichnet, dass** der Schutzthermoplast (30) in Form einer im Wesentlichen flachen Schnur aus einem im Wesentlichen geschmolzenen Material mit Hilfe einer Heizpistole aufgebracht wird.

2. Verfahren nach Anspruch 1, **dadurch gekennzeichnet, dass** die Schnittfläche (10) vor dem Abscheiden des Schutzkunststoffs (30) vorgewärmt wird.

3. Verfahren nach einem der vorstehenden Ansprüche, **dadurch gekennzeichnet, dass** auf die Oberfläche und die Konturen der Schnittfläche während oder nach dem Abscheiden des Schutzthermoplasts (30) ein Druck ausgeübt wird.

4. Verfahren nach einem der vorstehenden Ansprüche, **dadurch gekennzeichnet, dass** der Schutzthermoplast (30) nach seinem Abkühlen entgratet wird.

5. Verfahren nach einem der vorstehenden Ansprüche, **dadurch gekennzeichnet, dass** der Hohlkörper von einer Thermoplastmatrix (21), einer Ummantelungsschicht (22) aus einem Thermoplast, in den Glasfasern gemischt sind, und von einer Thermoplastbeschichtung (23) gebildet ist.

6. Verfahren nach Anspruch 5, **dadurch gekennzeichnet, dass** der Thermoplast der Matrix (21) mit denjenigen der Ummantelungsschicht (22) und der Beschichtung (23) sowie mit dem Schutzthermoplast (30) identisch ist.

7. Anwendung des Verfahrens nach einem der vorstehenden Ansprüche auf ein Rohr auf Thermoplast- und Verstärkungsfaserbasis.
